# EUROPÄISCHE PATENTSCHRIFT

(11) **EP 0 745 505 B1**
(45) Veröffentlichungstag und Bekanntmachung des Hinweises auf die Patenterteilung: **05.08.1998**
(21) Anmeldenummer: 96107311.1
(22) Anmeldetag: 09.05.1996
(51) Int. Cl.: B60M 1/30, H02G 5/02

(54) **Isolationsträger für Stromschienen**
Insulator support for conductor rails
Support d'isolation pour barres conductrices

(30) Priorität: 27.05.1995 DE 29508813 U
(43) Veröffentlichungstag der Anmeldung: 04.12.1996
(73) Patentinhaber: REHAU AG + Co, 95111 Rehau (DE)
(72) Erfinder: Schöbel, Michael, Dr., 95111 Rehau (DE); Meinel, Udo, 95111 Rehau (DE); Herrmann, Dieter, 95111 Rehau (DE)

(56) Entgegenhaltungen:
- DE-A- 2 458 029
- DE-U- 7 337 642
- FR-A- 2 175 670
- NL-A- 7 413 705

## Beschreibung

Die Erfindung betrifft einen Isolationsträger für Stromschienen mit einem Fußteil und einem Tragarm für die Stromschiene, wobei ein Teil des Fußteiles mit dem Tragarm eine Halteaufnahme für den Haltebereich der Stromschiene bildet.

Aus dem DE-U 88 06 387 ist ein Isolationsträger für Stromschienen aus glasfaserverstärktem Polyesterharz mit einem Fußteil und einem daran festgelegten Tragarm für die Stromschiene bekannt, bei dem das Fußteil einstückig ausgebildet ist und an seinem freien Ende mit Innenbereichen des Tragarmes eine Halteaufnahme für den Haltebereich der Stromschiene bildet. Der Tragarm selbst ist zweistückig ausgeführt und besteht aus einem fußteilseitigen Formstück und einem Kopfbereich. Das Formstück ist mit dem freien Ende des Fußteils unlösbar verbunden, während der Kopfbereich über eine Gleitpassung mit dem Formstück verbunden und über ein eine Presspassung bewirkendes Klemmelement an diesem lösbar festgelegt ist.

Nach dem bekannten Stand der Technik weist das Formstück eine Grundplatte zur Untergreifung sowie eine Basisplatte zur Übergreifung des freien Endes des Fußteils auf und besitzt darüberhinaus eine durch Abstandstege gehaltene Deckplatte. Die Basisplatte ihrerseits weist randseitig durchlaufend federartige Erhöhungen auf, welche in randnahe Nuten des freien Endes des Fußteils paßförmig eingreifen. Dieser bekannte Isolationsträger führt zu einer wirkungsvollen Halterung der Stromschiene am Kopfbereich des Fußteils, wobei sein mehrteiliger Aufbau als Nachteil einen erhöhten Montageaufwand erfordert.

Aus dem DE-U 91 14 501 ist ein weiterer Isolationsträger für Stromschienen bekannt, der eine montagefreundlichere Variante des bekannten Standes der Technik darstellt. Dabei ist am oberen freien Ende des Fußteils einstückig an den Fußteilkörper eine annähernd rechtwinkelig zum Fußteilkörper verlaufende langgestreckte Abkröpfung angeformt, die über ihre wirksame Länge als Auflager für die Anlagebereiche des Tragarms ausgebildet ist. Diese langgestreckte Abkröpfung bildet an ihrem freien Ende eine Fußteilhalteklaue, der am Tragarm die Tragarmhalteklaue gegenübersteht. Der Tragarm besitzt im Bereich seines der Tragarmhalteklaue entgegengesetzten freien Endes ein mechanisches Befestigungselement, über welches der Tragarm mit der Abkröpfung des Fußteils lösbar verbunden ist.

Dieses mechanische Befestigungselement ist beispielsweise ein metallischer Bolzen mit Schraubgewinde und Mutter, über den die Festlegung des Tragarms am Fußteil erfolgt. Die Verwendung von metallischen Befestigungselementen schafft Probleme bei der Isolation gegenüber Kriechströmen, die bei Feuchtigkeitsauftritt enstehen können. Zur Abstellung dieser Probleme sind Stromschienenabdeckungen bzw. Isolatorabdeckungen vorgesehen, welche die oberen Bereiche des Isolationsträgers vor Berührung schützen.

Hier setzt die Erfindung ein, die es sich zur Aufgabe gestellt hat, eine problemlose Verbindung des Fußteiloberteils mit dem Tragarm anzugeben, bei der eine zusätzliche Isolierung der Tragebereiche des Isolationsträgers entfallen kann. Erfindungsgemäß wird dazu vorgeschlagen, daß das die fußteilseitige Halteaufnahme der Stromschiene bildende obere freie Ende des Fußteils wenigstens eine zur Stromschiene hin teilgeschlossene Nutenöffnung aufweist, welche die fußteilseitige Halteaufnahme axial durchsetzt, daß in diese Nutenöffnung wenigstens ein in Nutenbreite geformtes Halteschwert eintaucht, an dessen vorderem freien Ende der tragarmseitige Haltebereich angeformt ist, und daß die Flanken der Nutenöffnung und das Halteschwert des Tragarms eine axial fluchtende Öffnung durchsetzt, in welche ein nichtmetallisches Befestigungselement eingesetzt ist.

Der Vorteil dieser Lösung ist in erster Linie darin zu sehen, daß im gesamten Tragebereich des Isolationsträgers keine Metallteile mehr vorgesehen sind. Dadurch erhält das gesamte Bauteil erhöhte Isolationseigenschaften, die zusätzliche Isolationen entbehrlich machen. Das in Nutenbreite geformte Halteschwert taucht in die Nutenöffnung an der fußteilseitigen Halteaufnahme derart ein, daß die Seitenflächen des Halteschwertes durch die Flanken der Nutenöffnung geführt sind. Die Flanken der Nutenöffnung und das Halteschwert des Tragarms werden durch eine axial fluchtende Öffnung durchsetzt, welche zur Aufnahme des nichtmetallischen Befestigungselementes dient. Dieses Befestigungselement kann beispielsweise ein keilartiges Befestigungsteil sein, das durch die fluchtende Öffnung hindurchgeschoben und verspannt wird. Dazu kann dieses Teil auf einer Seite ein Gewinde tragen, über welches durch Aufdrehen einer Mutter der Keil in seinen Sitz verspannt und an seinem Herausfallen aus der Öffnung dadurch gehindert wird. Anstelle eines solchen Keiles sind andere geeignete Formen von Befestigungsmitteln einsetzbar. Hier können beispielsweise nichtmetallische Schraubenbolzen mit nichtmetallischen Befestigungsmuttern, z.B. aus glasfaserverstärktem Kunststoff, eingesetzt werden, die beispielsweise über einen Splint aus Kunststoff gesichert sein können.

Der weitere Vorteil gegenüber dem bekannten Stand der Technik wird darin gesehen, daß die Gesamtzahl der Einzelteile des Isolationsträgers deutlich reduziert worden sind. Aufgrund der fehlenden Metallteile ist eine gesonderte Isolatorabdeckung als Schutz vor Berührung der oberen Bereiche des Isolationsträgers nicht mehr erforderlich.

Es erscheint zweckmäßig, daß die Nutenöffnung am oberen freien Ende des Fußteils nach hinten offen ist Dadurch können Anpaßprobleme des Halteschwerts in seiner Längserstreckung vermieden werden. Ferner kann an der fußteilseitigen Halteaufnahme in Verlängerung der Nutenöffnung eine nutenförmige Aufnahmeaussparung mit einer Auflagefläche für eine Gegenflache am Halteschwert geschaffen werden. Diese Auflagefläche ist insofern vorteilhaft, als damit das Abkippen des Tragarms nach dem Einsetzen des Halteschwerts in die Nutenöffnung vor dem Einbringen des Befestigungselementes in die axial fluchtende Öffnung vermieden wird. Mit dieser Auflagefläche wird der Tragarm nach dem Einsetzen des Halteschwerts in die Nutenöffnung in seiner Endposition gehalten. Das Einsetzen des Befestigungselementes in die axial fluchtende Öffnung kann damit spannungsfrei erfolgen.

Es erscheint ferner zweckmäßig, daß das Befestigungselement ein Keil ist, welcher zur dauerhaften Festlegung zusätzlich verspannt ist. Diese Verspannung kann über eine Schraube, Mutter oder ein ähnliches Befestigungsmittel wie ein Splint, ein Gegenkeil oder dergleichen erfolgen.

Je nach maximaler Belastung des Gesamtbauteils können die Anzahl der Nutenöffnungen an der fußteilseitigen Halteaufnahme und der Halteschwerter des Tragarms variabel gestaltet sein. So können eine Nut und ein Halteschwert ausreichen, um eine bestimmte Belastung auszuhalten. Es kann jedoch auch zweckmäßig sein, zwei oder mehrere parallele Nuten am oberen freien Ende des Fußteils einzubringen, in welche zwei oder mehr am Tragarm angeformte Halteschwerter entsprechend eingreifen. Diese Variationen liegen im Bereich der Erfindung und können bei Überschreitung normaler Belastungsgrenzen beliebig eingesetzt werden.

In der Zeichnung sind Ausführungsbeispiele des erfindungsgemäßen Isolationsträgers schematisch dargestellt; es zeigt:
- Fig. 1: das obere freie Ende des Fußteils in isometrischer Darstellung
- Fig. 2: den Tragarm in isometrischer Darstellung
- Fig. 3: den Isolationsträger im Zusammenbau in isometrischer Darstellung

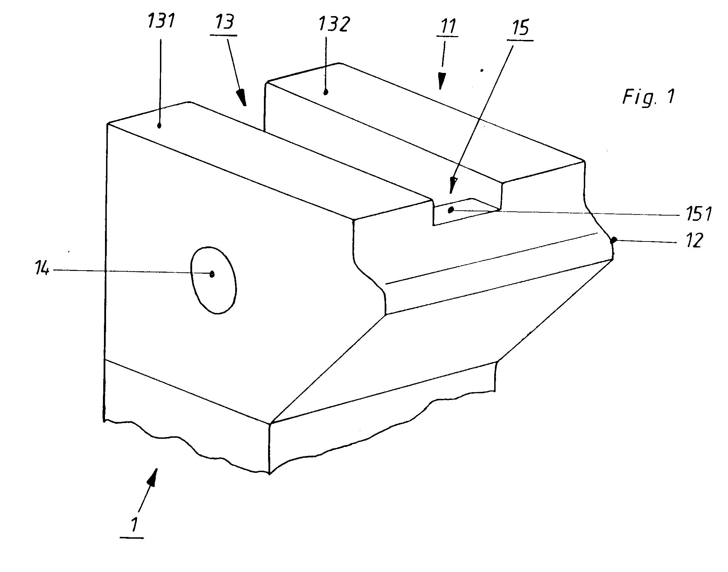

Fig. 1 zeigt das obere freie Ende 11 des Fußteils 1, das in seinem vorderen Bereich die fußteilseitige Halteaufnahme 12 der in der Zeichnung nicht dargestellten Stromschiene 3 bildet. Das obere freie Ende 11 des Fußteils 1 ist zum größten Teil von der Nutenöffnung 13 axial durchsetzt. Die Nutenöffnung 13 wird von den Flanken 131, 132 seitlich begrenzt welche ihrerseits von der Öffnung 14 durchsetzt sind.

Im Bereich der fußteilseitigen Halteaufnahme 12 ist in Verlängerung der Nutenöffnung 13 eine nutenförmige Aufnahmeaussparung 15 mit einer Auflagefläche 151 geschaffen. Auf dieser Auflagefläche 151 liegt im Zusammenbau mit dem Tragarm eine Gegenfläche an dessen Halteschwert auf.

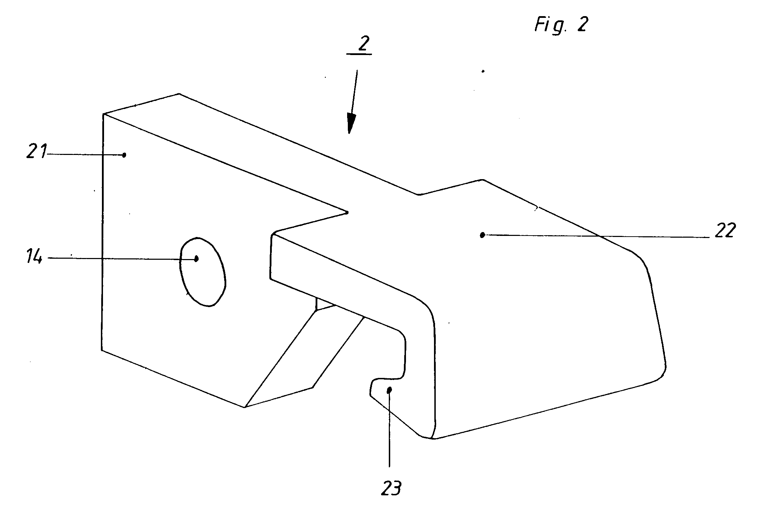

Fig. 2 Zeigt den Tragarm 2 in isometrischer Darstellung. Der Tragarm 2 besitzt ein der Breite der Nutenöffnung 13 am oberen freien Ende 11 des Fußteils 1 entsprechend geformtes Halteschwert 21. Am vorderen freien Ende des Halteschwerts 21 ist einstückig der tragarmseitige Haltebereich 22 für die in der Zeichnung nicht dargestellte Stromschiene 3 angeformt. Dieser tragarmseitige Haltebereich 22 besitzt an seinem freien Ende die Halteklaue 23, die im Zusammenbau den Tragebereich der Stromschiene 3 von außen umfaßt. Das Halteschwert 21 ist von der Öffnung 14 durchsetzt, welche mit den Öffnungen 14 durch die Flanken 131, 132 der Nutenöffnung 13 fluchtet.

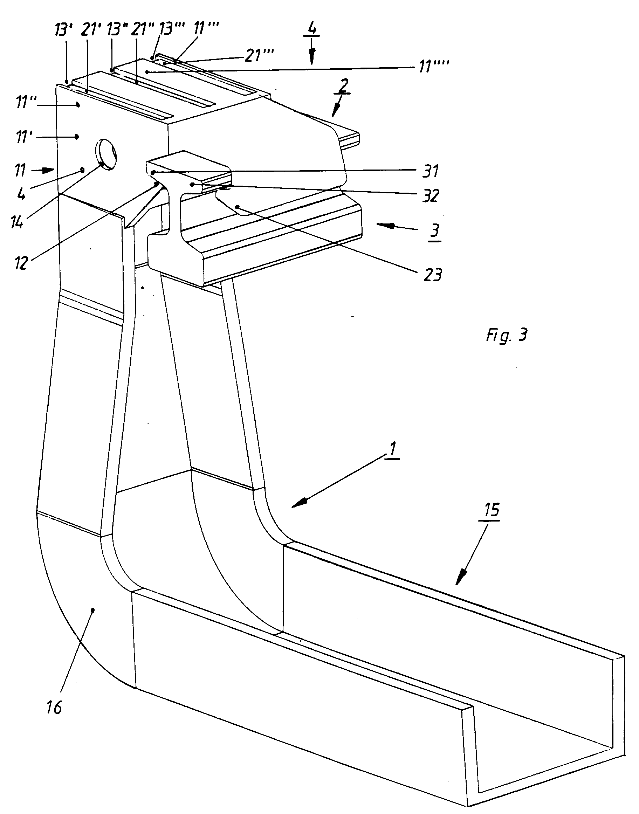

Fig. 3 zeigt die Gesamtansicht des Fußteils 1 mit aufgesetztem Tragarm 2 und eingesetzter Stromschiene 3. Das Fußteil 1 ist in seinem Basisbereich 15 kastenförmig mit offener Deckseite gestaltet. Dieser Basisbereich 15 verläuft an der Umlenkung 16 annähernd senkrecht nach oben und geht einstückig in das obere freie Ende 11 des Fußteils 1 über. Die Darstellung in Fig. 3 zeigt die Besonderheit, nach der drei Nutenöffnungen 13', 13'', 13''' in das Ende 11 eingebracht sind. Entsprechend besitzt der Tragarm 2 in der jeweiligen Nutenbreite geformte Halteschwerter 21', 21'', 21'''. Die Öffnung 14 fluchtet durch die Flanken 11', 11'', 11''', 11'''' und durch die Halteschwerter 21', 21'' 21'''. Das Befestigungselement 4 ist außerhalb der Öffnung 14 in Bolzenform dargestellt. Das Befestigungselement 4 ist über seine Länge konisch gestaltet. Es wird in Pfeilrichtung in die fluchtende Öffnung 14 eingesetzt und einseitig über ein in der Zeichnung nicht dargestelltes Befestigungselement festgelegt.

Die Montage der Stromschienenhalterung erfolgt einfach durch Auflegen des inneren Haltebereiches 31 auf die fußteilseitige Halteaufnahme 12. Danach wird der Tragarm 2 mit seinen Halteschwertern 21', 21'', 21''' in die Nutenöffnungen 13', 13'', 13''' eingesetzt, wobei die Halteklaue 23 des Tragarms 2 den vorderen Haltebereich 32 der Stromschiene 3 umfaßt. Mit dem Einsetzen des Befestigungselementes 4 in die fluchtende Öffnung 14 ist der Montagevorgang der Stromschiene 3 beendet.

## Patentansprüche

1. Isolationsträger für Stromschienen mit einem Fußteil und einem Tragarm für die Stromschiene, wobei ein Teil des Fußteils mit dem Tragarm eine Halteaufnahme für den Haltebereich der Stromschiene bildet, dadurch gekennzeichnet, daß das die fußteilseitige Halteaufnahme der Stromschiene (3) bildende obere freie Ende (11) des Fußteils (1) wenigstens eine zur Stromschiene (3) hin teilgeschlossene Nutenöffnung (13) aufweist, welche das obere freie Ende (11) axial durchsetzt, daß in diese Nutenöffnung (13) wenigstens ein in Nutenbreite geformtes Halteschwert (21) eintaucht, an dessen vorderem freien Ende der tragarmseitige Haltebereich (22) angeformt ist, und daß die Flanken (131, 132) der Nutenöffnung (13) und das Halteschwert (21) des Tragarms (2) eine axial fluchtende Öffnung (14) durchsetzt, in welche ein nichtmetallisches Befestigungselement (4) eingesetzt ist.

2. Isolationsträger nach Anspruch 1, dadurch gekennzeichnet, daß die Nutenöffnung (13) an der fußteilseitigen Halteaufnahme (12) nach hinten hin offen ist.

3. Isolationsträger nach Anspruch 1, dadurch gekennzeichnet, daß an der fußteilseitigen Halteaufnahme (12) in Verlängerung der Nutenöffnung (13) eine nutenförmige Aufnahmeaussparung (15) mit einer Auflagefläche (151) für eine Gegenfläche am Halteschwert (21) geschaffen ist.

4. Isolationsträger nach Anspruch 1, dadurch gekennzeichnet, daß das Befestigungselement (4) ein Keil ist, welcher zur dauerhaften Festlegung zusätzlich verspannt ist.

5. Isolationsträger nach Anspruch 4, dadurch gekennzeichnet, daß als Verspannelement eine Schraube, ein Splint, ein Gegenkeil oder dergleichen eingesetzt ist.

## Claims

1. Insulating support for live rails with a base section and a support arm for the live rail, in which a part of the base combines with the support arm to form a mounting for the supported portion of the live rail, characterised in that the free upper end (11) of the base (1) that forms the base-half of the mounting for the live rail (3) incorporates at least one slot (13) which is partially closed at the end facing the live rail (3) and which divides the upper free end (11) axially; in that at least one support block (21) with the same width as the slot fits into the slot (13), its free front end being shaped to form the support-arm-half (22) of the mounting; and in that there is an axially aligned hole (14) through the flanks (131, 132) of the slot (13) and also through the support block (21) for the support arm (2), into which hole a non-metallic fixing element (4) in inserted.

2. Insulating support according to Claim 1, characterised in that the slot (13) on the base-half of the mounting (12) is open at the rear.

3. Insulating support according to Claim 1, characterised in that the slot (13) on the base-half of the mounting (12) is extended by a channel-shaped rebate (15) with a locating surface (151) which contacts a corresponding surface on the support block (21).

4. Insulating support according to Claim 1, characterised in that the fixing element (4) is a wedge with additional tensioning to ensure a permanent fix.

5. Insulating support according to Claim 4, characterised in that the bracing element is a bolt, split pin, gib or similar.

## Revendications

1. Support isolant pour rails conducteurs constitué d'un pied et d'un bras d'accrochage pour le rail, une partie du pied formant avec le bras un logement pour le maintien du rail, caractérisé en ce que l'extrémité libre supérieure (11) du pied (1) formant le logement du rail (3) coté pied, présente au moins une rainure (13) partiellement fermée vers le rail conducteur (3), cette rainure traversant l'axe de l'extrémité libre supérieure (11), en ce qu'une pièce de maintien (21) ayant la largeur de la rainure correspondante vient s'imbriquer dans celle-ci (13), à l'extrémité libre du profilé de maintien étant formé la section de maintien (22) côté bras d'appui et en ce qu'une ouverture alignée dans l'axe (14) traverse les flancs (131, 132) de la rainure (13) et le profilé de maintien (21) du bras d'appui (2), dans cette ouverture étant placé un élément de fixation (4) non métallique.

2. Support isolant pour rails conducteurs selon la revendication 1, caractérisé en ce que la rainure (13) au niveau du logement (12) côté pied est ouverte vers l'arrière.

3. Support isolant pour rails conducteurs selon la revendication 1, caractérisé en ce qu'au niveau du logement côté pied (12), dans le prolongement de la rainure (13) un évidement (15) est prévu avec une surface d'appui (151) correspondant à la surface du profilé de maintien (21).

4. Support isolant pour rails conducteurs selon la revendication 1, caractérisé en ce que l'élément de fixation (4) est une cale, laquelle est consolidée pour une fixation durable.

5. Support isolant pour rails conducteurs selon la revendication 4, caractérisé en ce qu'une vis, une goupille, une contre-cale ou autres similaires sont utilisés en tant qu'éléments de consolidation.
